# EUROPEAN PATENT APPLICATION

(11) **EP 4 727 190 A1**
(43) Date of publication of application: **15.04.2026**
(21) Application number: 24206254.5
(22) Date of filing: 11.10.2024
(51) Int. Cl.: H04W 12/30, H04W 4/50, H04L 9/40, H04W 12/04

(54) **ARCHITECTURE, VEHICLE AND METHOD FOR CONFIGURING A VEHICLE**

(71) Applicant: NXP B.V., 5656 AG Eindhoven (NL)
(72) Inventor: Khullar, Naman, 5656 AG Eindhoven (NL); Haslinger, Dorian, 5656 AG Eindhoven (NL); Manninger, Marc, 5656 AG Eindhoven (NL)
(74) Representative: Krott, Michel

(57) **Abstract**

An architecture (300) is arranged to (re-)configure a software defined vehicle, SDV, that includes electronic control unit, ECU comprising: a host processor (330); and a single secure element, SE, (340) operably coupled to the host processor (330), wherein the SE (340) comprises: a main credential applet (342) operably coupled to at least one application applet (344, 346, 348, 350, 352) and the main credential applet (342) is arranged to program the at least one application applet (344, 346, 348, 350, 352).

## Description

### Technical Field

The technical field relates to an architecture and a method for a configuration of vehicles, and a vehicle so adapted. The invention is applicable to, but not limited to, an architecture and a method for a configuration of software-defined vehicles.

### Background

Some modern vehicles include a so-called 'Software Defined Vehicle' (SDV) architecture, which is used to provide various functionality for the vehicle that uses the SDV architecture, such as backend wireless connectivity to a mobile phone system or smart phone-based car access. In order to enhance security, it is known that Secure Elements (SEs) are being used to, e.g., secure the internet connection. It is also known that such SEs also provide digital key management for smart access.

A SE is a highly secure IC with a secure operating system (OS), often provided in a tamper-resistant processor chip or secure component. The SE is often used to protect assets (root of trust, sensitive data, keys, certificates, applications) against high-level software (SW) and/or hardware (HW) attacks. Applications that process this sensitive data on an SE are isolated and so operate within a controlled environment that is generally not affected by software (including possible malware) found elsewhere on the OS (e.g., vehicle OS). Typically, the HW and embedded SW of the SEs is designed to meet the requirements of the Security IC Platform Protection Profile [PP 0084], including resistance to physical tampering scenarios.

SEs exist in various form factors, as devices such as smart cards, Universal Integrated Circuit Cards (UICCs), or smart microSD cards, or embedded, or integrated, as parts of larger devices. SEs are an evolution of the microchips employed in earlier smart cards, which have been adapted to suit the needs of numerous use cases, such as smartphones, tablets, set-top boxes, wearables, connected cars, and other internet of things (IoT) devices. It is also known that SEs provide secure isolation, storage and processing for applications (termed 'applets') that they host while being isolated from the external world and from other applications running on the SE.

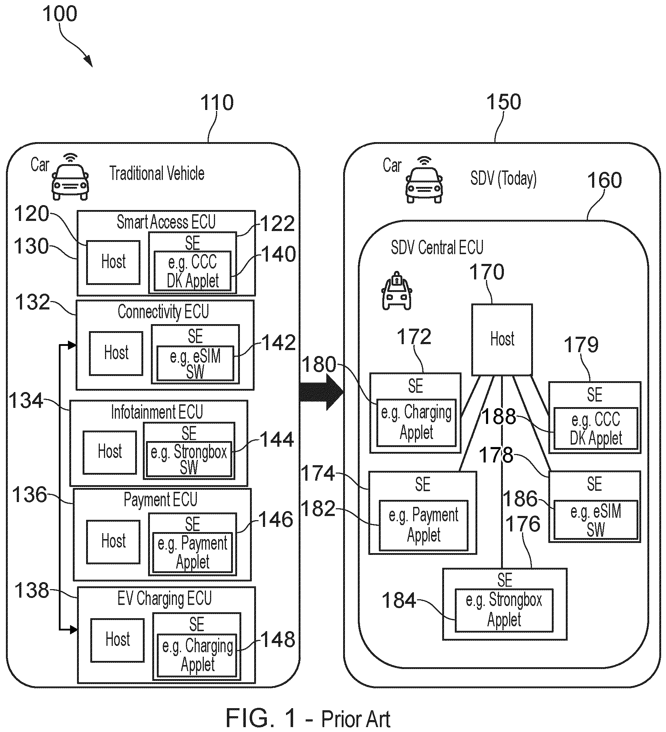

In today's vehicles without modern SDV focused architecture, features such as smart access key management. (e.g. car connectivity consortium (CCC) digital key (DK) protocol), eSIM-connectivity, infotainment applications (e.g., Android strongbox), payment or EV charging authentication are typically securely implemented in a dedicated, standalone certified SE that is located within each (of multiple) electronic control units ECUs), as illustrated in the simplified high-level view 100 of a configuration of a known (traditional) vehicle 110 of FIG. 1. Here, the traditional vehicle 110 includes separate ECUs, each with their respective host processor and SE. Every SE needs a host processor application software and only a SE can run an applet. The traditional vehicle 110 includes a smart access ECU 130 to support digital key management with its own host processor 120 and a SE 122 with its CCC DK applet 140, each with their respective host processor and SE. Similarly, the traditional vehicle 110 includes a connectivity ECU 132 with its own host processor and a SE with an eSIM SW applet 142, and an infotainment ECU 134 with its own host processor and a SE with, for example, a strongbox SW applet 144. Similarly, the traditional vehicle 110 includes a payment ECU 136 with its own host processor and a SE with a payment applet 146, and an electric vehicle (EV) charging ECU 138 with its own host processor and a SE with, for example, a charging applet 148, with the connectivity ECU 132 and the EV charging ECU 138 being connected.

FIG. 1 also illustrates the development of a known software defined vehicle (SDV) 150, where the architecture of the SDV 150 combines each of the use cases and its functionality within the same powerful single SDV central ECU, which is considered to be the brain of a SDV. The general trend of SDVs enables more components and more functionality to be employed within a central ECU inside a vehicle. This evolution of a SDV allows a single host processor 170 to be connected to multiple SEs, including a smart access SE 179 to support digital key management with its CCC DK applet 188, a connectivity SE 178 with an eSIM SW applet 186, and an infotainment SE 176 with, for example, a strongbox SW applet 184, a payment SE 174 with a payment applet 182 and an EV charging SE 172 with a charging applet 180. Thus, in this known SDV example, five separate SEs may be required to securely and safely implement these five different applications. The inventors have recognized and appreciated that this approach within an SDV can be very costly and complex to handle, as well as being potentially difficult for end customers to configure each of these functions within their vehicle.

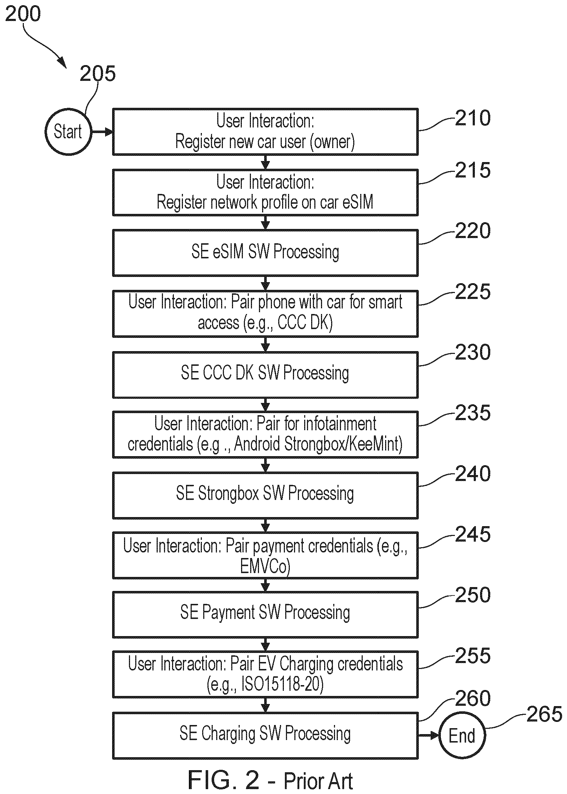

FIG. 2 illustrates a flowchart 200 of a known user interaction flow in (re-)configuring a vehicle. The flowchart starts at 205 and at 210, there is user interaction with a user needing to register, say, a new vehicle as being a new user/owner. At 215, further user interaction is required with the user registering a network profile on the vehicle eSIM. At 220, the SE eSIM SW processing is performed/uploaded. At 225, there is further user interaction required, with pairing the user's phone with vehicle to facilitate smart access support digital key management (e.g., CCC DK). At 230, the SE CCC DK SW processing is performed/uploaded. At 235, yet further user interaction is required, with pairing for infotainment credentials (e.g., according to Android Strongbox^{™}/KeeMint^{™}). At 240,the SE Strongbox SW processing is performed/uploaded. At 245, still yet further user interaction is needed, with pairing payment credentials (e.g., EMVCo). At 250, the SE Payment SW processing is performed/uploaded. At 255, a still yet further user interaction is required, with a pairing of EV Charging credentials (e.g., compliant with ISO15118-20). At 260, the SE Charging SW processing is performed/uploaded. The flowchart then ends at 265, assuming in this example that five SEs have been programmed. Thus, in today's vehicle architecture, setting up all the services within a vehicle is clearly time-consuming as a vehicle owner, with separate user interactions needed for, for example: eSIM, smart access (CCC DK), Strongbox (for Android Automotive OS), in-car payment (EMVCo), plug & Charge EV charging (ISO15118-20). Each user interaction inherently triggers the proper processing within the dedicated SE, which is inefficient and complex to handle for a user.

The inventors have recognized and appreciated that this approach within an SDV requires increased and more complex processing on the host processor 170 of a SDV central ECU 160 of FIG. 1, which is likely to result in slower and inefficient scheduling, due to there being many components interacting with different SEs for different use cases. In essence, in practice, all the components would then need to be (re-)configured each time the vehicle is bought or sold. In addition, as more than one application host software program needs to be correctly ported into the host processor 170, to support multiple functions, this further increases the overall complexity of an already complex SW implementation of the SDV central ECU 160. The inventors have also recognized and appreciated that this known approach within an SDV results in a significantly increased number of input/output (I/O) connections by components and the host processor 170 driving the SEs, again leading to additional costs and space. Furthermore, customer-specific functions, such as for example smartphone car access and SIM-based internet connectivity need to be set up individually by a vehicle owner, car dealer or the vehicle manufacturer, which is again inefficient and time-consuming. In addition, the inventors have also recognized and appreciated that this known approach within an SDV In addition, the inventors have also recognized and appreciated that this known approach within an SDV suffers from the inflexibility that infotainment features that require a secure application (e.g. Android Strongbox) do not have a seamless interface to other applications such as digital key management or network connectivity, which is also important in setting up correctly and efficiently for an end customer.

US9699587B2 describes an approach that focuses on loading a new network profile onto a SIM card without a need of replacing (e.g., a plastic) SIM module inside a vehicle. The card can remain the same, just the credentials change. Accordingly, there is a need for an architecture, method for (re-)configuring a vehicle, such as a software defined vehicle, and a vehicle therefor.

### Summary of the invention

Examples herein described provide an architecture, method for (re-)configuring a software defined vehicle, and a software defined vehicle therefor, as described in the accompanying claims. Specific examples are set forth in the dependent claims. These and other aspects will be apparent from and elucidated with reference to the example embodiments described hereinafter.

### Brief description of the drawings

Further details, aspects and examples will be described, by way of example only, with reference to the drawings. In the drawings, like reference numbers are used to identify like or functionally similar elements. Elements in the figures are illustrated for simplicity and clarity and have not necessarily been drawn to scale.
FIG. 1 illustrates a simplified high-level view of the configuring of a known vehicle and a known software defined vehicle (SDV).
FIG. 2 illustrates a flowchart of a known user interaction flow.
FIG. 3 illustrates one example of a simplified high-level view of a configuring of a SDV, according to some examples.
FIG. 4 illustrates one example of a flowchart of user interaction flow, according to some examples.
FIG. 5 illustrates one example implementation of a SE SW architecture, according to some examples.
FIG. 6 illustrates one example of a SDV, according to some examples.

### Detailed description

In some examples, one or more of the aforementioned problems may be alleviated using a single secure element (SE) that is arranged to include a main credential applet (rather than the known approach of requiring many SEs) where the main credential applet is configured to hold the main credentials to personalize at least one and preferably all required services in relevant applets contained in the SE and connected to the main credential applet, in order to initiate the desired service(s) in the SDV. Furthermore, with a single connection between a host processor and the single SE, a suitably-configured hardware architecture and software flows may be arranged to efficiently and securely combine different applications on the same SE, for example to implement SE-based security and safety critical vehicle functions within the same SDV ECU.

In a first aspect, an architecture is described that is arranged to (re-)configure a SDV, the architecture comprising a SDV electronic control unit, ECU comprising: a host processor; and a single secure element, SE, operably coupled to the host processor, wherein the SE comprises: a main credential applet operably coupled to at least one application applet and the main credential applet is arranged to program the at least one application applet. In this manner, the architecture having a single SE may provide a secure smart access and connectivity system that may allow a seamless combination of multiple applications, e.g., smart access digital key management, SIM-card functionality for connectivity, Android Strongbox or in-vehicle payment for infotainment or EV charging within a single secure element. In this manner, the architecture may be able to provide a more efficient hardware (HW) and software (SW) architecture with less complexity and costs. Additionally, the architecture may be able to improve the user/customer experience for vehicle users and owners, for example with a vehicle ownership transfer or to provide less-complicated service management. Furthermore, with this arrangement, SE applications (e.g., applets) are able to interact with each other, for example, a digital key for a user's smart phone also transfers the payment profile for EV charging to the EV charging applet.

In some examples, the main credential applet may hold main credentials (or have main credentials uploaded thereto) used to personalize SDV services in the at least one application applet. In some examples, the application applet(s) may include a plurality of applets, which may include one or more of: a smart access digital key management applet, an eSIM software applet, an infotainment applet, a payment applet, an electrical vehicle, EV, charging applet. In this manner, less effort is required for car dealers and vehicle manufacturers on SE & provisioning feature personalization for end customers.

In some examples, the main credential applet may be arranged to receive a single user interaction to set-up a plurality of application applets of the SDV, wherein the plurality of application applets provide at least one of: services, applications run within the SDV. In this manner, there may be less (or even no) difficulties imposed on a vehicle user/owner, as the vehicle user/owner only needs to log into a single application (the main credential applet) that is sufficient to transfer the complete user data and provision multiple applets.

In some examples, the main credential applet may be pre-provisioned in part with generic SDV information, that is supplemented with user information provided in the single user interaction. In this manner, an OEM may pre-load as much generic data as possible to the main credential applet, which then only requires user-specific data to be uploaded by a customer, SDV user/owner.

In some examples, the SE may be arranged to provide smart access digital key management and connectivity system of multiple applications and services run within the SDV.

In some examples, the main credential applet may be arranged to establish a secure communication link with the application applet(s) prior to a secure transfer of data from the main credential applet to the at least one application applet. In this manner, the architecture may support all secure element related functions within the single SE and help to reduce costs and complexity of security-related functions of the SDV. In this manner, the architecture may support the security and safety relevant applications in order to mutually benefit from each other and thereby improve the overall user experience of end customers.

In a second aspect, a method for (re-)configuring a SDV is described. The method comprising: connecting a host processor to a single secure element, SE, within a SDV electronic control unit, ECU; connecting a main credential applet to at least one application applet within the SE; and programming the at least one application applet by the main credential applet. In a third aspect, a SDV is described according to the first aspect.

Although examples of the invention are described with reference to a use of a single secure element, SE, within a SDV electronic control unit, ECU; connecting a main credential applet to at least one application applet within the SE; and programming the at least one application applet by the main credential applet, it is envisaged that skilled artisans may consider alternative approaches. For example, it is envisaged that completely mirroring the secure element of a smart phone may be used to achieve similar results in some instances. However, in performing this approach, the inventors have recognised and appreciated that vehicle specific applications could not be used. Furthermore, it is envisaged that similar results in some instances may also be achieved by implementing a host software logic performing a comparable operation. However, in performing this approach, the inventors have recognised and appreciated that the approach will not achieve the same security level.

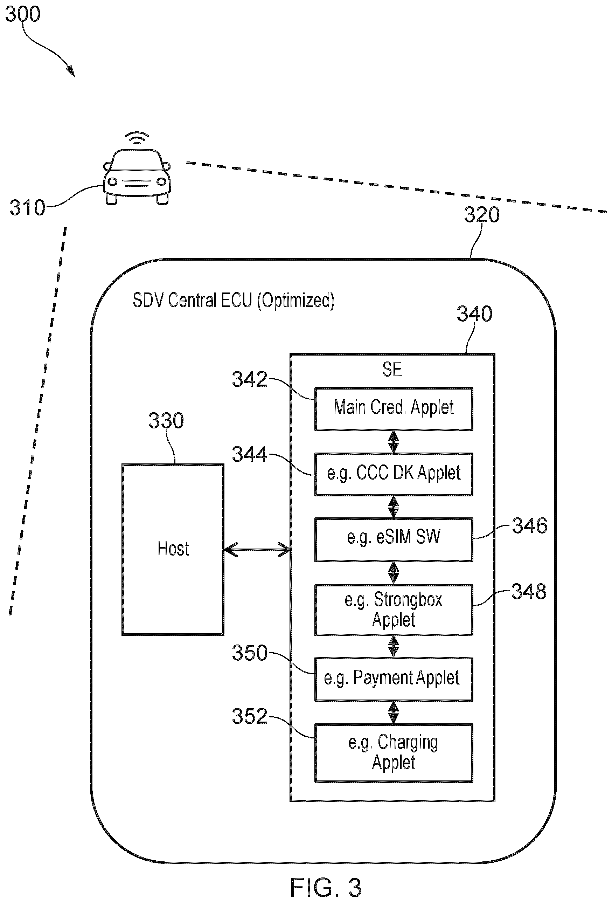

FIG. 3 illustrates one example of a simplified architecture 300 of a configuring of a SDV 310, according to some examples. Here, the SDV 310 includes a single ECU 320, with a respective single host processor 330. The host processor 330 is connected to a single SE 340. In accordance with examples described herein, the single SE 340 includes a main credential applet 342 that is operably coupled to a number of other applets and is arranged to provision those number of other applets. In some examples, the main credential applet 342 is arranged to provision those number of other applets with pre-provisioned software and/or user-initiated data. The number of other applets includes, in this example, a smart access digital key management applet 344 (e.g., a CCC DK applet), a connectivity eSIM SW applet 346, an infotainment applet 348 with, for example, strongbox SW, a payment applet 350 and an electric vehicle (EV) charging applet 352. A skilled artisan will appreciate that the simplified architecture 300 has the main credential applet 342 individually connected to the other applets (with the arrows to/from each applet showing a communication to/from the main credential applet 342).

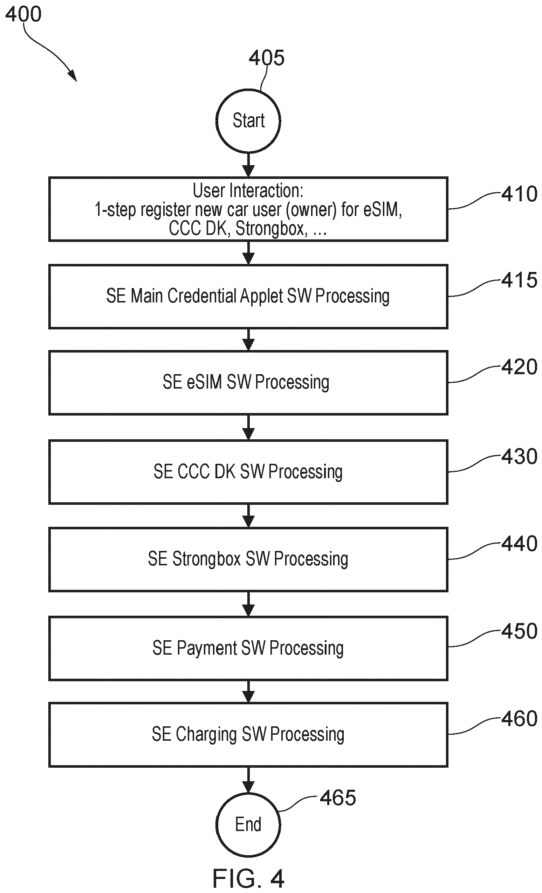

FIG. 4 illustrates one example of a flowchart 400 of user interaction flow in (re-)configuring a SDV, according to some examples herein described. The flowchart 400 encompasses connecting a host processor (such as host processor 330 in FIG. 3) to a single secure element, SE, (such as SE 340 in FIG. 3) within a SDV electronic control unit, ECU, (such as single ECU 320 in FIG. 3); connecting a main credential applet (such as main credential applet 342 in FIG. 3) to at least one application applet (such as applets 344, 346, 348, 350, 352 in FIG. 3) within the SE; and programming the at least one application applet by the main credential applet. The flowchart starts at 405 and at 410, there is user interaction with a single-step registration of, say, a new vehicle as being a new user/owner and user registration of, e.g., a network profile on the vehicle eSIM, CCC DK, infotainment credentials. In examples herein-described, the end user needs only to register to the main credential applet. At 415, the SE main credential applet software processing is performed. In examples herein-described, the main credential applet apriori knows the provisioning specifics of the most common services, such as, eSIM, smart access digital key management applet (e.g., a CCC DK applet), Strongbox (Android), Payment (EMVCo) or EV Charging (for example according to ISO 15118-20). Thus, here, the SE main credential applet may be arranged to use its credentials to enable and program each application specific applet (service) on the SE with the correct credentials. In some examples, the SE (central) main credential applet holds the main credentials to personalize at least one and preferably all required services in the relevant applet for the desired service.

At 420, the SE eSIM SW processing is performed/uploaded. At 430, the SE CCC DK SW processing is performed/uploaded. At 440, the SE Strongbox SW processing is performed/uploaded. At 450, the SE Payment SW processing is performed/uploaded. At 460, the SE Charging SW processing is performed/uploaded. The flowchart then ends at 465, assuming in this example that five SEs have been programmed, following the initial SE main credential applet software processing being performed at 415. In this manner, there is significant efficiency improvements over the current adopted approach as described with reference to FIG. 2, with respect to, for example, pairing network profile, digital key, infotainment, etc., as the known approach requires many separate SEs that are independently controlled and programmed. As such, only one single user interaction is required to set-up all the required SDV services and applications. It is noted that the above SW processing can be performed in any order and may include one or more of the above-mentioned processes and/or other SW processes.

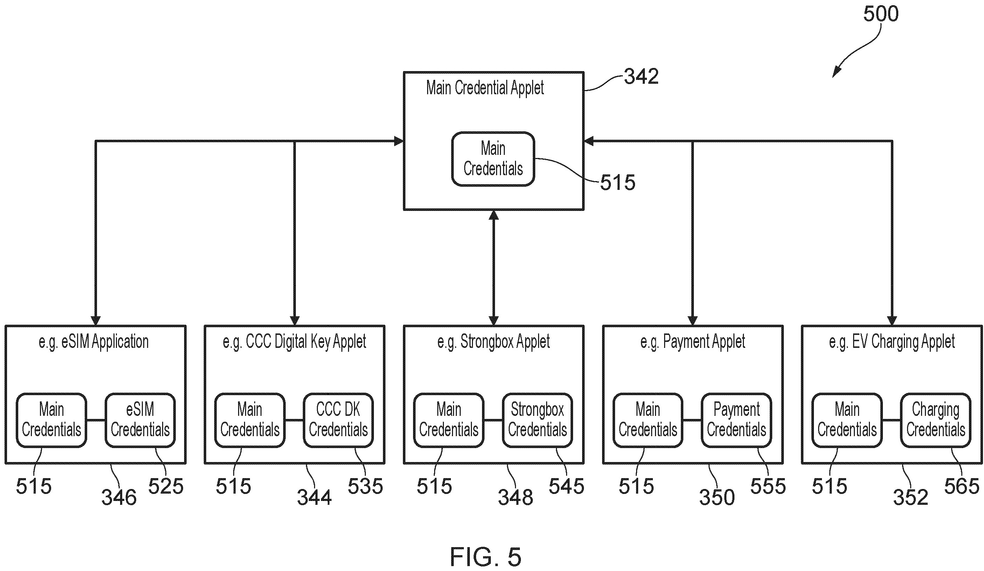

FIG. 5 illustrates one example implementation of a SE SW architecture 500, according to some examples. The SE SW architecture 500 includes a SE main credential applet 342 arranged to receive a single-step registration by a user of, say, a new vehicle following the new user/owner wishing to register their new vehicle, with the single-step user registration including one or more of, for example, a network profile on the vehicle eSIM, CCC DK, infotainment credentials, etc. Thus, in examples herein-described, the end user needs only to register main credential details 515 to the main credential applet 342. In examples herein-described, the main credential applet 342 apriori knows the provisioning specifics of the most common services, such as, eSIM, smart access digital key management applet 344 (e.g., using a CCC DK applet), Strongbox (Android), Payment (EMVCo) or EV Charging (for example according to ISO 15118-20). Thus, here, the SE main credential applet 342 is arranged to use its uploaded main credential details 515 to enable and program each application specific applet (service) on the SE with the correct credentials. In some examples, the SE (central) main credential applet 342 holds the main credential details 515 to personalize at least one and preferably all required services in the relevant applet for the desired service.

In the SE SW architecture 500, the main credential applet 342 is coupled to a plurality of, and preferably, in some examples, each application or applet. In this example, the application(s) and/or applet(s) include: an eSIM application 346, which includes programmed main credential details 515 and eSIM credentials 525, a CCC DK applet 344, which includes programmed main credential details 515 and SE CCC DK credentials programmed by the main credential applet 342 and a strongbox applet 348, which includes programmed main credential details 515 and strongbox credentials 545. In this example, the application(s) and/or applet(s) further include: a payment applet 350, which includes programmed main credential details 515 and payment credentials 555, as well as an EV charging applet 352, which includes programmed main credential details 515 and charging credentials 565.

In some examples, it is envisaged that the vehicle's original equipment manufacturer (OEM) may define the architecture of the main credential applet 342 and define those services that are meaningful and desired by the vehicle user. In this manner, the OEM may pre-provision some functions in the main credential applet 342 and the SE accordingly, in order to significantly improve the user interaction and thus the user experience of a vehicle user. In some examples, it is envisaged that the main credential applet 342 will establish a secure communication link with one or more of these other applets in order to securely transfer data. As will be appreciated, many known techniques exist for applets and secure communications between the applets, for example a known JavaCard^{™} applet employs so-called 'shareable interfaces' to securely share data between applets. Hence, typically, the implementation applets is often dependent upon what the OEM wants to offer to potential customers.

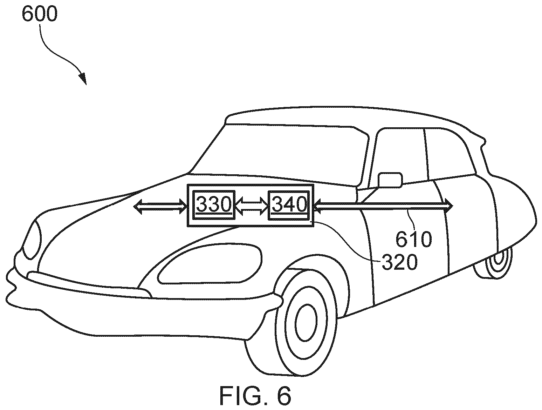

FIG. 6 illustrates one example of a SDV 600, adapted according to some examples. Here, the SDV 600 includes a single ECU 320, with a respective single host processor 330. The host processor 330 is connected to a single SE 340. In accordance with examples described herein, the single SE 340 includes a main credential applet that is operably coupled to a number of other applets and arranged to provision those number of other applets within the SDV 600. In some examples, the SDV may employ an intelligent transportation system 610 coupled to the single ECU 320 with control signals controlled by the host processor 330 and signals routed from the one or more applets to devices or circuits around the SDV, e.g., a payment applet (such as payment applet 450 of FIG. 4 and FIG. 5) that routes payment credentials 555, an EV charging applet (such as EV charging applet 460 of FIG. 4 and FIG. 5) that routes charging credentials 565 to circuits (not shown) located around the SDV 600.

In the foregoing specification, the invention has been described with reference to specific example embodiments. It will, however, be evident that various modifications and changes may be made therein without departing from the scope of the invention as set forth in the appended claims and that the claims are not limited to the specific examples described above.

The connections as discussed herein may be any type of connection suitable to transfer signals from or to the respective nodes, units or devices, for example via intermediate devices. Accordingly, unless implied or stated otherwise, the connections may for example be direct connections or indirect connections. The connections may be illustrated or described in reference to being a single connection, a plurality of connections, unidirectional connections, or bidirectional connections. However, different embodiments may vary the implementation of the connections. For example, separate unidirectional connections may be used rather than bidirectional connections and vice versa. Also, plurality of connections may be replaced with a single connection that transfers multiple signals serially or in a time multiplexed manner. Likewise, single connections carrying multiple signals may be separated out into various different connections carrying subsets of these signals. Therefore, many options exist for transferring signals. Those skilled in the art will recognize that the architectures depicted herein are merely exemplary, and that in fact many other architectures can be implemented which achieve the same functionality.

Any arrangement of components to achieve the same functionality is effectively 'associated' such that the desired functionality is achieved. Hence, any two components herein combined to achieve a particular functionality can be seen as 'associated with' each other such that the desired functionality is achieved, irrespective of architectures or intermediary components. Likewise, any two components so associated can also be viewed as being 'operably connected,' or 'operably coupled,' to each other to achieve the desired functionality.

Furthermore, those skilled in the art will recognize that boundaries between the above-described operations merely illustrative. The multiple operations may be combined into a single operation, a single operation may be distributed in additional operations and operations may be executed at least partially overlapping in time. Moreover, alternative embodiments may include multiple instances of a particular operation, and the order of operations may be altered in various other embodiments. Also, for example, in one example embodiment, the illustrated examples may be implemented as circuitry located on a single integrated circuit or within a same device.

In some examples, the various components within the SDV ECU can be realized in discrete or integrated component form, with an ultimate structure therefore being an application-specific or design selection. As the illustrated embodiments of the present invention may, for the most part, be implemented using electronic components and circuits known to those skilled in the art, details will not be explained in any greater extent than that considered necessary as illustrated below, for the understanding and appreciation of the underlying concepts of the present invention and in order not to obfuscate or distract from the teachings of the present invention. A skilled artisan will appreciate that the level of integration of the host processor and/or SE circuits or components may be, in some instances, implementation-dependent.

Also, for example, the examples, or portions thereof, may implemented as soft or code representations of physical circuitry or of logical representations convertible into physical circuitry, such as in a hardware description language of any appropriate type. Also, the invention is not limited to physical devices or units implemented in non-programmable hardware but can also be applied in programmable devices or units able to perform the desired sampling error and compensation by operating in accordance with suitable program code, such as minicomputers, personal computers, notepads, personal digital assistants, electronic games, automotive and other embedded systems, cell phones and various other wireless devices, commonly denoted in this application as 'computer systems'. However, other modifications, variations and alternatives are also possible. The specifications and drawings are, accordingly, to be regarded in an illustrative rather than in a restrictive sense.

In the claims, any reference signs placed between parentheses shall not be construed as limiting the claim. The word 'comprising' does not exclude the presence of other elements or steps then those listed in a claim. Furthermore, the terms 'a' or 'an,' as used herein, are defined as one or more than one. Also, the use of introductory phrases such as 'at least one' and 'one or more' in the claims should not be construed to imply that the introduction of another claim element by the indefinite articles 'a' or `an' limits any particular claim containing such introduced claim element to inventions containing only one such element, even when the same claim includes the introductory phrases 'one or more' or 'at least one' and indefinite articles such as 'a' or 'an.' The same holds true for the use of definite articles. Unless stated otherwise, terms such as 'first' and 'second' are used to arbitrarily distinguish between the elements such terms describe. Thus, these terms are not necessarily intended to indicate temporal or other prioritization of such elements. The mere fact that certain measures are recited in mutually different claims does not indicate that a combination of these measures cannot be used to advantage.

## Claims

1. An architecture (300) arranged to (re-)configure a software defined vehicle, SDV, the architecture (300) comprising a SDV electronic control unit, ECU comprising:
a host processor (330); and
a single secure element, SE, (340) operably coupled to the host processor (330), wherein the SE (340) comprises: a main credential applet (342) operably coupled to at least one application applet (344, 346, 348, 350, 352) and the main credential applet (342) is arranged to program the at least one application applet (344, 346, 348, 350, 352).

2. The architecture (300) of Claim 1 wherein the main credential applet (342) holds main credential details (515) used to personalize SDV services in the at least one application applet (344, 346, 348, 350, 352).

3. The architecture (300) of Claim 1 or Claim 2 wherein the at least one application applet (344, 346, 348, 350, 352) comprises a plurality of applets (344, 346, 348, 350, 352).

4. The architecture (300) of Claim 3 wherein the plurality of applets (344, 346, 348, 350, 352) comprise one or more of: a smart access digital key management applet (344), an eSIM software applet, an infotainment applet, a payment applet, an electrical vehicle, EV, charging applet.

5. The architecture (300) of any preceding Claim wherein the main credential applet (342) is arranged to receive a single user interaction to set-up a plurality of application applets of the SDV, wherein the plurality of application applets provide at least one of: services, applications run within the SDV.

6. The architecture (300) of Claim 5, wherein the main credential applet (342) is pre-provisioned in part with generic SDV information, that is supplemented with user information provided in the single user interaction.

7. The architecture (300) of any preceding Claim, wherein the single SE (340) is arranged to provide smart access digital key management and connectivity system of multiple applications and services run within the SDV.

8. The architecture (300) of any preceding Claim, wherein the main credential applet (342) is arranged to establish a secure communication link with the at least one application applet (344, 346, 348, 350, 352) prior to a secure transfer of data from the main credential applet (342) to the at least one application applet (344, 346, 348, 350, 352).

9. A method (400) for (re-)configuring a software defined vehicle, SDV, the method comprising:
connecting a host processor (330) to a single secure element, SE, (340) within a SDV electronic control unit, ECU;
connecting a main credential applet (342) to at least one application applet (344, 346, 348, 350, 352) within the SE (340); and
programming (415) the at least one application applet (344, 346, 348, 350, 352) by the main credential applet (342).

10. The method (400) for (re-)configuring a SDV of Claim 9 further comprising uploading main credentials used to personalize SDV services by the at least one application applet (344, 346, 348, 350, 352) to the main credential applet (342).

11. The method (400) for (re-)configuring a SDV of Claim 9 or Claim 10 wherein the at least one application applet (344, 346, 348, 350, 352) comprises a plurality of applets (344, 346, 348, 350, 352) that comprise one or more of: a smart access digital key management applet (344), an eSIM software applet, an infotainment applet, a payment applet, an electrical vehicle, EV, charging applet.

12. The method (400) for (re-)configuring a SDV of any of preceding Claims 9 to 11, further comprising receiving by the main credential applet (342), a single user interaction to set-up a plurality of application applets of the SDV, wherein the plurality of application applets provide at least one of: services, applications run within the SDV.

13. The method (400) for (re-)configuring a SDV of Claim 12, further comprising:
pre-provisioning, in part, the main credential applet (342) with generic SDV information; and
supplementing pre-provisioned generic SDV information with user information provided in the single user interaction.

14. The method (400) for (re-)configuring a SDV of any of preceding Claims 9 to 13, further comprising establishing by the main credential applet (342) a secure communication link with the at least one application applet (344, 346, 348, 350, 352) prior to securely transferring data from the main credential applet (342) to the at least one application applet (344, 346, 348, 350, 352).

15. A software defined vehicle (600) comprising the architecture (300) of any of preceding Claims 1 to 8.

## Amended claims

### Amended claims in accordance with Rule 137(2) EPC.

**8.** The architecture (300) of any preceding Claim, wherein the main credential applet (342) is arranged to establish a secure communication link with the at least one application applet (344, 346, 348, 350, 352) prior to a secure transfer of data from the main credential applet (342) to the at least one application applet (344, 346, 348, 350, 352).

**9.** A method (400) for (re-)configuring a software defined vehicle, SDV, the method comprising:
connecting a host processor (330) to a single secure element, SE, (340) within a SDV electronic control unit, ECU;
connecting a main credential applet (342) to at least one application applet (344, 346, 348, 350, 352) within the SE (340); and
programming (415) the at least one application applet (344, 346, 348, 350, 352) by the main credential applet (342).

**10.** The method (400) for (re-)configuring a SDV of Claim 9 further comprising uploading main credentials used to personalize SDV services offered by the at least one application applet (344, 346, 348, 350, 352) to the main credential applet (342).

**11.** The method (400) for (re-)configuring a SDV of Claim 9 or Claim 10 wherein the at least one application applet (344, 346, 348, 350, 352) comprises a plurality of applets (344, 346, 348, 350, 352) that comprise one or more of: a smart access digital key management applet (344), an eSIM software applet, an infotainment applet, a payment applet, an electrical vehicle, EV, charging applet.

**12.** The method (400) for (re-)configuring a SDV of any of preceding Claims 9 to 11, further comprising receiving by the main credential applet (342), a single user interaction to set-up a plurality of application applets of the SDV, wherein the plurality of application applets provide at least one of: services, applications run within the SDV.

**13.** The method (400) for (re-)configuring a SDV of Claim 12, further comprising:
pre-provisioning, in part, the main credential applet (342) with generic SDV information; and
supplementing pre-provisioned generic SDV information with user information provided in the single user interaction.
